(19) Europäisches Patentamt
European Patent Office
Office européen des brevets

(11) **EP 3 515 727 B1**

(12) **FASCICULE DE BREVET EUROPEEN**

(45) Date de publication et mention
de la délivrance du brevet:
**09.09.2020  Bulletin 2020/37**

(51) Int Cl.:
***B60C 9/00*** *(2006.01)*     ***C08J 5/04*** *(2006.01)*

(21) Numéro de dépôt: **17780812.8**

(22) Date de dépôt: **15.09.2017**

(86) Numéro de dépôt international:
**PCT/FR2017/052466**

(87) Numéro de publication internationale:
**WO 2018/051031 (22.03.2018 Gazette 2018/12)**

(54) **COMPOSITE D'ÉLASTOMÈRE ET PNEUMATIQUE COMPRENANT CE COMPOSITE**

ELASTOMERKOMPOSIT UND REIFEN ENTHALTEND EIN SOLCHES KOMPOSIT

COMPOSITE OF AN ELASTOMER AND TIRE COMPRISING THIS COMPOSITE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **19.09.2016  FR 1658763**

(43) Date de publication de la demande:
**31.07.2019  Bulletin 2019/31**

(73) Titulaire: **Compagnie Générale des Etablissements Michelin**
**63000 Clermont-Ferrand (FR)**

(72) Inventeurs:
• **GUILLAUMAIN, Jérémy**
**63040 Clermont-Ferrand Cedex 9 (FR)**

• **ANDRE, Guillaume**
**63040 Clermont-Ferrand Cedex 9 (FR)**
• **VALLET, Solenne**
**69007 Lyon (FR)**
• **VENUAT, Julien**
**63040 Clermont-Ferrand Cedex 9 (FR)**

(74) Mandataire: **Desbordes, Guillaume**
**Manufacture Française des**
**Pneumatiques Michelin**
**CBS/CORP/J/PI - F35 - Ladoux**
**23, place des Carmes-Déchaux**
**63040 Clermont-Ferrand Cedex 9 (FR)**

(56) Documents cités:
**EP-A1- 2 233 318     DE-A1-102013 223 573**
**FR-A1- 2 402 020     FR-A1- 2 996 807**
**FR-A1- 3 005 471**

**Description**

L'invention concerne un composite d'élastomère comprenant au moins un élément de renfort comprenant un brin multifilamentaire de polyamide aromatique ou copolyamide aromatique et un brin multifilamentaire de polyester assemblés ensemble. L'invention concerne également un pneumatique comprenant une nappe de carcasse obtenue à partir de ce composite.

Depuis des années les manufacturiers de pneumatiques cherchent à améliorer les armatures de carcasse des pneumatiques pour augmenter leurs forces à rupture notamment pour lutter contre les aléas routiers (appelés en anglais « road hazard ») du type chocs trottoirs, nid de poule etc.. tout en maintenant une bonne endurance. L'endurance de l'armature de carcasse est essentielle pour assurer la longévité du pneumatique.

On connait de l'état de la technique un pneumatique comprenant une armature de carcasse comprenant une seule nappe de carcasse comprenant plusieurs éléments de renfort. Chaque élément de renfort comprend deux brins multifilamentaires en polyester assemblés ensemble et enroulés en hélice l'un autour de l'autre à une torsion de 270 tours par mètre. Chaque brin multifilamentaire de carcasse présente un titre relativement élevé égal à 334 tex. Cet élément de renfort présente un facteur de torsion égal à 7,3 et un diamètre égal à 0,96 mm.

Cette nappe de carcasse est obtenue à partir d'un composite comprenant une composition d'élastomère dans laquelle sont noyés les éléments de renforts. Lors de la fabrication de ce composite, par exemple par calandrage, on fait défiler les éléments de renforts et on amène deux bandes réalisée dans la composition d'élastomère, appelés skims d'élastomère, de part et d'autre des éléments de renfort de façon à ce que les éléments de renforts soient pris en sandwich entre les deux skims d'élastomère. Ces deux skims d'élastomère sont relativement épais de façon à ce qu'une quantité suffisante de la composition d'élastomère comble l'espace entre deux éléments de renforts adjacents afin d'assurer la formation correcte de ponts de la composition d'élastomère nécessaire à la cohésion des éléments de renfort entre eux par l'intermédiaire de la composition d'élastomère.

Le composite ainsi obtenu a une épaisseur relativement élevée de 1,47 mm avec une densité de 80 éléments de renfort par décimètre de composite.

Le composite et la nappe de carcasse obtenue à partir de ce composite, sont donc relativement lourds du fait du diamètre relativement important des éléments de renfort et de l'épaisseur des deux skims d'élastomère nécessaires au calandrage correct de ces éléments de renfort.

L'homme du métier cherche donc à réduire la masse des pneumatiques, en particulier par une réduction d'épaisseur de la nappe de carcasse.

Deux solutions sont habituellement mises en œuvre. La première consiste à diminuer la densité d'éléments de renfort. La deuxième consiste à augmenter la force à rupture de chaque élément de renfort.

En diminuant la densité d'éléments de renfort de la nappe de carcasse, par exemple à 60 éléments de renfort par décimètre, on allège la nappe de carcasse mais cela conduit à la diminution de la force à rupture de cette dernière. Cette diminution de la force à rupture de la nappe de carcasse conduit à une baisse de la performance du pneumatique à l'égard des aléas routiers, ce qui n'est évidemment pas souhaitable.

En augmentant la force à rupture de chaque élément de renfort, notamment en abaissant la torsion, par exemple à 230 tours par mètre, l'endurance va fortement diminuer ce qui est préjudiciable à la longévité du pneumatique.

Ces deux solutions sont donc incompatibles avec les performances recherchées pour la nappe de carcasse, notamment la deuxième solution consistant à abaisser la torsion qui diminue l'endurance, performance qui est essentielle pour la nappe de carcasse.

D'autres solutions ont été développées, notamment dans les documents EP2233318 qui décrit un pneumatique comprenant une nappe de carcasse comprenant un élément de renfort comprenant un assemblage constitué d'un premier brin de fibres d'aramide formé de deux filaments de fibres d'aramide et d'un deuxième brin de fibres de polyester. Les documents FR3005471, FR2996807, DE10201322573 et FR2402020 décrivent d'autres solutions. Néanmoins, ces solutions sont industriellement complexes et non adaptées, en termes de coût et/ou de performances, à la grande majorité des usages du pneumatique, usages correspondant majoritairement à ceux de véhicules non sportifs.

L'invention a pour but de trouver un composite d'élastomère permettant d'obtenir une nappe de carcasse relativement légère et capable d'être utilisée dans de nombreux types de pneumatique correspondants à des usages très variés, par exemple à des usages allant de ceux correspondant à des véhicules citadins à ceux correspondant à des véhicules sportifs. L'invention a également pour but de trouver un composite d'élastomère permettant d'obtenir une nappe de carcasse présentant une force à rupture satisfaisante pour lutter contre les aléas routiers, et comprenant des éléments de renfort présentant des caractéristiques de titres et de torsions permettant au concepteur de pneumatique, d'adapter, selon l'usage auquel est destiné le pneumatique, les autres performances du pneumatique, par exemple l'endurance.

A cet effet, l'invention a pour objet un composite d'élastomère comprenant au moins un élément de renfort noyé dans une composition d'élastomère, l'élément de renfort comprenant un assemblage constitué :

- d'un brin multifilamentaire de polyamide aromatique ou copolyamide aromatique, et
- d'un brin multifilamentaire de polyester,

les deux brins étant enroulés en hélice l'un autour de l'autre et l'élément de renfort étant équilibré en torsions, avec les monofilaments des deux brins présentant, dans l'élément de renfort final, la même torsion résiduelle et le facteur de torsion K de l'élément de renfort allant de 5,2 à 6,5 avec K défini par la formule $K = (R \times Ti^{1/2}) / 957$
dans laquelle R est la torsion de l'élément de renfort exprimée en tours par mètre et Ti est la somme des titres des brins multifilamentaires de l'élément de renfort en tex, et la densité d'éléments de renfort dans le composite allant de 80 à 145 éléments de renfort par décimètre de composite ; avec la torsion résiduelle étant strictement inférieure à 2,5% de R.

Par filament en polyamide aromatique ou copolyamide aromatique, on rappelle de manière bien connue qu'il s'agit d'un filament de macromolécules linéaires formées de groupes aromatiques liés entre eux par des liaisons amides dont au moins 85% sont directement liées à deux noyaux aromatiques, et plus particulièrement de fibres en poly (p-phénylène téréphtalamide) (ou PPTA), fabriquées depuis fort longtemps à partir de compositions de filage optiquement anisotropes. Parmi les polyamides aromatiques ou copolyamides aromatiques, on pourra citer les polyarylamides (ou PAA, notamment connu sous la dénomination commerciale Ixef de la société Solvay), le poly(métaxylylène adipamide), les polyphtalamides (ou PPA, notamment connu sous la dénomination commerciale Amodel de la société Solvay), les polyamides semi-aromatiques amorphes (ou PA 6-3T, notamment connu sous la dénomination commerciale Trogamid de la société Evonik), les méta-aramides (ou poly(métaphénylène isophtalamide ou PA MPD-I notamment connu sous la dénomination commerciale Nomex de la société Du Pont de Nemours) ou les para-aramides (ou poly(paraphénylène téréphtalamide ou PA PPD-T notamment connu sous la dénomination commerciale Kevlar de la société Du Pont de Nemours ou Twaron de la société Teijin).

Par filament en polyester, on rappelle qu'il s'agit d'un filament de macromolécules linéaires formées de groupes liés entre eux par des liaisons esters. Les polyesters sont fabriqués par polycondensation par estérification entre un diacide carboxylique ou de l'un de ses dérivés un diol. Par exemple le polyéthylène téréphtalate peut être fabriqué par polycondensation de l'acide téréphtalique et de l'éthylène glycol. Parmi les polyesters connus, on pourra citer le polyéthylène téréphtalate (PET), le polyéthylène naphthalate (PEN), le polybutylène téréphthalate (PBT), le polybutylène naphthalate (PBN), le polypropylène téréphthalate (PPT) ou le polypropylène naphthalate (PPN).

Par équilibré en torsions, on comprend que les deux brins multifilamentaires sont enroulés avec une torsion sensiblement identique et que la torsion des monofilaments de chaque brin multifilamentaire, c'est-à-dire la torsion des monofilaments du brin multifilamentaire de polyamide ou copolyamide aromatique et la torsion des monofilaments du brin de polyester est sensiblement nulle. En effet, le procédé de fabrication de ces éléments de renforts, bien connu de l'état de la technique, comprend une première étape durant laquelle, chaque filé de monofilaments (en anglais « yarn ») est tout d'abord individuellement tordu sur lui-même (selon une torsion initiale R1' et R2' avec R1'=R2') dans une direction donnée D'=D1'=D2' (respectivement sens S ou Z, selon une nomenclature reconnue désignant l'orientation des spires selon la barre transversale d'un S ou d'un Z), pour former un brin ou surtors (en anglais « strand ») dans lequel les monofilaments se voient imposer une déformation en hélice autour de l'axe du brin. Puis, au cours d'une seconde étape, les deux brins, sont ensuite retordus ensemble selon une torsion finale R3 telle que R3=R1'=R2' en direction D3 opposée à la direction D'=D1'=D2' (respectivement sens Z ou S), pour l'obtention de l'élément de renfort (en anglais « cord »). Cet élément de renfort est alors dit équilibré en torsion car les monofilaments des deux brins présentent, dans l'élément de renfort final, la même torsion résiduelle car R1'=R2'. Cette torsion résiduelle est nulle ou sensiblement nulle car R3=R1'=R2' et la direction D'=D1'=D2' est opposée à la direction D3. Par torsion résiduelle sensiblement nulle, on entend que la torsion résiduelle est strictement inférieure à 2,5% de la torsion R3.

Par composition d'élastomère, on entend une composition comprenant un élastomère, de préférence diénique, par exemple du caoutchouc naturel, une charge renforçante, par exemple du noir de carbone et/ou de la silice et un système de réticulation, par exemple un système de vulcanisation, de préférence comprenant du soufre.

Par « assemblage constitué », on entend que l'assemblage ne comprend pas d'autre brin multifilamentaire que les deux brins multifilamentaires de polyamide aromatique ou copolyamide aromatique et de polyester.

Dans l'intervalle sélectionné de facteur de torsion, pour un titre donné, l'élément de renfort pour pneumatique présente une force à rupture relativement constante ce qui permet au concepteur du pneumatique, d'adapter d'autres caractéristiques de l'élément de renfort, notamment la torsion, à l'usage ou aux usages auxquels est destiné le pneumatique. En outre, dans l'intervalle sélectionné de facteur de torsion, l'élément de renfort présente une endurance compatible avec la plupart des usages des pneumatiques actuels.

Le composite selon l'invention présente l'avantage de permettre au concepteur de pneumatique, avec la densité d'élément de renfort conforme à l'invention, d'utiliser une unique nappe de carcasse dans le pneumatique tout en conservant, d'une part, une force à rupture satisfaisante pour lutter contre les aléas routiers et, d'autre part, une endurance compatible avec la plupart des usages des pneumatiques actuels.

Pour un titre donné, plus la torsion est grande, plus le risque industriel d'obtenir une dispersion importante de la force à rupture des éléments de renfort est élevé. Ainsi, par rapport à des éléments de renfort présentant, pour un titre donné, un facteur de torsion élevé, c'est-à-dire strictement supérieur à 6,5, l'intervalle sélectionné de facteur de torsion permet de choisir des éléments de renfort présentant une torsion plus faible, et donc susceptibles de conduire à moins de dispersion de la force à rupture de l'élément de renfort.

Le brin multifilamentaire de polyamide aromatique ou copolyamide aromatique et le brin multifilamentaire de polyester sont assemblés ensemble et sont enroulés en hélice l'un autour de l'autre.

Le facteur de torsion, ci-après désigné par la lettre K (appelé Twist Multiplier en anglais) est défini par la formule:

$$K = (R \times Ti^{1/2}) / 957$$

dans laquelle R est la torsion de l'élément de renfort exprimée en tours par mètre (torsion R3 décrite dans le préambule de la présente demande) et Ti est la somme des titres des brins multifilamentaires de l'élément de renfort en tex.

La mesure de la torsion R de l'élément de renfort peut être réalisée par toute méthode connue par l'homme du métier, par exemple conformément aux normes ASTM D1423 ou ASTM D 885/D 885MA de janvier 2010 (paragraphe 30), par exemple à l'aide d'un torsiomètre.

Le titre (ou densité linéique) de chaque brin est déterminé selon la norme ASTM D1423. Le titre est donné en tex (poids en grammes de 1000 m de produit - rappel: 0, 111 tex égal à 1 denier). La densité d'éléments de renfort dans le composite est le nombre d'éléments de renfort pris sur un décimètre du composite selon la direction perpendiculaire à la direction selon laquelle les éléments de renfort s'étendent parallèlement les uns par rapport aux autres.

Dans un mode de réalisation avantageux, l'élément de renfort comprend également une couche d'une composition adhésive revêtant l'assemblage constitué des deux brins. Une telle composition adhésive est par exemple de type RFL (acronyme pour Résorcinol-Formaldéhyde-Latex).

Avantageusement, le facteur de torsion K de l'élément de renfort va de 5,2 à 6,3 et de préférence de 5,2 à 6,1. Ainsi, pour un titre donné, on réduit encore davantage le risque de dispersion de la force à rupture de l'élément de renfort.

Avantageusement, la densité d'éléments de renfort dans le composite va de 90 à 130 éléments de renfort par décimètre de composite, de préférence de 100 à 125 éléments de renfort par décimètre de composite, plus préférentiellement de 105 à 120 éléments de renfort par décimètre de composite. Dans ces intervalles de densité d'élément de renfort, le composite présente une force à rupture relativement élevée et un coût relativement bas permettant son utilisation dans des pneumatiques adaptés à la plupart des usages.

Avantageusement, la torsion de l'élément de renfort va de 250 à 405 tours par mètre, de préférence de 250 à 390 tours par mètre et encore plus préférentiellement de 250 à 380 tours par mètre. Pour un titre donné, dans cet intervalle de torsion, l'élément de renfort présente une endurance suffisante pour être utilisé dans un pneumatique adapté à la plupart des usages actuels et un risque de dispersion de sa force à rupture relativement faible.

Avantageusement, le titre du brin multifilamentaire de polyamide aromatique ou copolyamide aromatique va de 140 à 210 tex, de préférence de 150 à 190 tex, plus préférentiellement de 160 à 180 tex. Dans l'intervalle de facteur de torsion conforme à l'invention, en utilisant des titres inférieurs aux intervalles décrits ci-dessus, l'élément de renfort présenterait une torsion relativement élevée ce qui conduirait à un risque de dispersion de la force à rupture. A l'inverse, dans l'intervalle de facteur de torsion conforme à l'invention, en utilisant des titres supérieurs aux intervalles décrits ci-dessus, l'élément de renfort présenterait une torsion relativement faible ce qui conduirait un risque de diminution de l'endurance. Ainsi, les intervalles de titre du brin multifilamentaire de polyamide aromatique ou copolyamide aromatique décrits ci-dessus permettent d'obtenir préférentiellement un bon compromis force à rupture-endurance.

Avantageusement, le titre du brin multifilamentaire de polyester va de 100 à 210 tex, de préférence de 120 à 190 tex, plus préférentiellement de 130 à 180 tex. Dans un mode de réalisation, le titre du brin multifilamentaire de polyester va encore plus préférentiellement de 160 à 180 tex. De façon analogue au titre du brin multifilamentaire de polyamide aromatique ou copolyamide aromatique, dans les intervalles de titres du brin multifilamentaire de polyester décrits ci-dessus, l'élément de renfort présente préférentiellement un bon compromis force à rupture-endurance.

Avantageusement, le module initial en extension de l'élément de renfort va de 5,0 à 10,5 cN/tex. Le module initial est relatif à certaines performances de l'élément de renfort aux faibles déformations, notamment la rigidité du pneumatique. Le concepteur du pneumatique pourra ainsi choisir le module initial de façon à adapter l'élément de renfort et donc le pneumatique à l'usage auquel est destiné le pneumatique.

De préférence, le module initial en extension de l'élément de renfort va de 7,3 à 9,9 cN/tex, plus préférentiellement de 7,3 à 9,0 cN/tex. En effet, lors du procédé de fabrication d'un pneumatique de l'état de la technique, on enroule la nappe de carcasse et ses deux extrémités sont superposées l'une sur l'autre sur une longueur de l'ordre du centimètre. Dans cette zone de superposition, la nappe de carcasse présente une double épaisseur et donc une densité d'élément de renfort K deux fois plus élevée par rapport aux zones adjacentes dans lesquelles la nappe de carcasse présente une seule épaisseur et donc une densité d'élément de renfort K/2. Cette différence de densités d'élément de renfort entre la zone de superposition et les zones adjacentes induit une différence de sollicitation entre les éléments de renfort de chacune de ces zones et donc une différence d'allongement relativement importante entre les éléments de renfort de chacune de ces zones créant une déformation inesthétique du flanc du pneumatique.

Dans ces intervalles préférentiels de module initial, le module initial étant avantageusement relativement élevé, la différence de sollicitation entre les éléments de renfort de chacune des zones induit une différence d'allongement relativement faible et donc permet de réduire les problèmes inesthétiques de la déformation du flanc du pneumatique.

Avantageusement, le module final en extension de l'élément de renfort va de 14,0 à 21,5 cN/tex. Le module final est relatif à certaines performances de l'élément de renfort aux grandes déformations, notamment la résistance de l'élément de renfort lorsque l'élément de renfort est exposé à un aléa routier. Le concepteur du pneumatique pourra choisir le module final de façon à rendre l'élément de renfort le plus résistant possible à la plupart des aléas routiers sans pour autant pénaliser d'autres performances.

De préférence, le module final en extension de l'élément de renfort va de 14,8 à 20,9 cN/tex, plus préférentiellement de 16,6 à 20,0 cN/tex.

On définit le module initial comme la pente à l'origine de la partie linéaire de la courbe Force-Allongement qui intervient juste après une prétension standard de 0,5 cN/tex. Le module final est défini comme la pente au point correspondant à 80% de la force à rupture de la courbe Force-Allongement. La courbe Force-Allongement est obtenue par mesure de manière connue à l'aide d'une machine de traction « INSTRON » munie de pinces « 4D ». Les échantillons testés subissent une traction sur une longueur initiale de 400 mm à une vitesse nominale de 200 mm/min, sous une prétension standard de 0,5 cN/tex.

Avantageusement, le rapport du module final sur le module initial va de 2,10 à 2,75, de préférence de 2,15 à 2,65 et plus préférentiellement de 2,20 à 2,45.

Dans un premier mode de réalisation particulièrement avantageux, le facteur de torsion K va de 5,2 à 5,5, de préférence de 5,3 à 5,5 et encore plus préférentiellement de 5,3 à 5,4.

Dans ce premier mode de réalisation, la torsion de l'élément de renfort va avantageusement de 250 à 340 tours par mètre, de préférence de 260 à 325 tours par mètre, plus préférentiellement de 275 à 305 tours par mètre. Pour un titre donné, dans cet intervalle de torsion, l'élément de renfort présente une endurance suffisante pour être utilisé dans un pneumatique adapté à la plupart des usages actuels et un risque de dispersion de sa force à rupture relativement faible.

Dans ce premier mode de réalisation, le module initial en extension de l'élément de renfort va avantageusement de 7,5 à 9,9 cN/tex, de préférence de 7,8 à 9,0 cN/tex, plus préférentiellement de 8,0 à 8,5 cN/tex.

Dans ce premier mode de réalisation, le module final en extension de l'élément de renfort va avantageusement de 17,5 à 21,0 cN/tex, de préférence de 17,9 à 20,8 cN/tex, plus préférentiellement de 18,2 à 19,5 cN/tex. Dans ce premier mode de réalisation, le rapport du module final sur le module initial va avantageusement de 2,10 à 2,40, de préférence de 2,15 à 2,35, plus préférentiellement de 2,20 à 2,35.

Dans un deuxième mode de réalisation particulièrement avantageux, le facteur de torsion K va de 5,5 à 6,5, de préférence appartenant à l'intervalle ]5,5 ; 6,5] (c'est-à-dire excluant la valeur 5,5), préférentiellement de 5,6 à 6,1 et encore plus préférentiellement de 5,9 à 6,1.

Dans ce deuxième mode de réalisation, la torsion de l'élément de renfort va avantageusement de 275 à 365 tours par mètre, de préférence de 275 à 350 tours par mètre, plus préférentiellement de 300 à 330 tours par mètre. Comme dans le premier mode de réalisation, pour un titre donné, dans cet intervalle de torsion, l'élément de renfort présente une endurance suffisante pour être utilisé dans un pneumatique adapté à la plupart des usages actuels et un risque de dispersion de sa force à rupture relativement faible.

Dans ce deuxième mode de réalisation, le module initial en extension de l'élément de renfort va avantageusement de 5,7 à 8,5 cN/tex, de préférence de 6,2 à 7,8 cN/tex, plus préférentiellement de 6,8 à 7,5 cN/tex.

Dans ce deuxième mode de réalisation, le module final en extension de l'élément de renfort va avantageusement va de 15,0 à 19,0 cN/tex, de préférence de 15,8 à 18,5 cN/tex, plus préférentiellement de 16,6 à 17,9 cN/tex.

Dans ce deuxième mode de réalisation, le rapport du module final sur le module initial va avantageusement de 2,15 à 2,45, de préférence de 2,20 à 2,40, plus préférentiellement de 2,25 à 2,40.

Avantageusement, le rapport du diamètre de l'élément de renfort sur l'épaisseur du composite est strictement inférieur à 0,65, de préférence inférieur ou égal à 0,62. Dans un mode de réalisation, le rapport du diamètre de l'élément de renfort sur l'épaisseur du composite est plus préférentiellement inférieur ou égal à 0,58. Ainsi, on diminue l'épaisseur du composite et ainsi l'hystérèse des pneumatiques pour réduire la consommation d'énergie des véhicules équipés de tels pneumatiques.

Avantageusement, le diamètre de l'élément de renfort est inférieur ou égal à 0,95 mm, de préférence inférieur ou égal à 0,80 mm, plus préférentiellement inférieur ou égal à 0,70 mm. L'élément de renfort selon l'invention s'étend selon une direction générale G et le diamètre de cet élément de renfort est le diamètre dans lequel est inscrit cet élément de renfort dans un plan de coupe perpendiculaire à la direction G.

Avantageusement, l'épaisseur du composite est inférieure ou égale à 1,45 mm, de préférence, inférieure ou égale à 1,30 mm, plus préférentiellement inférieure ou égale à 1,20 mm. L'épaisseur du composite est la distance la plus courte entre les deux surfaces externes du composite, c'est-à-dire la distance mesurée selon une direction perpendiculaire aux deux surfaces externes du composite.

Un autre objet de l'invention est un pneumatique comprenant une armature de carcasse comprenant au moins une nappe de carcasse obtenue à partir d'un composite d'élastomère tel que défini précédemment.

Les pneumatiques de l'invention, en particulier, peuvent être destinés à des véhicules à moteur du type tourisme, 4x4, "SUV" (Sport Utility Vehicles), mais également à des véhicules deux-roues tels que motos, ou à des véhicules industriels tels que métro, bus, engins de transport routier (camions, tracteurs, remorques), véhicules hors-la-route, engins agricoles ou de Génie civil.

De préférence, les pneumatiques peuvent être destinés à des véhicules à moteur du type tourisme, 4x4, "SUV" (Sport Utility Vehicles).

Avantageusement, l'armature de carcasse comprend une seule nappe de carcasse. L'utilisation combinée de polyamide aromatique ou copolyamide aromatique et de polyester permet d'obtenir une nappe de carcasse présentant des propriétés de résistance mécanique, notamment de force à rupture et d'endurance suffisamment élevées pour permettre au concepteur du pneumatique de limiter le nombre de nappes de carcasse dans l'armature de carcasse à une seule (et pas plusieurs) nappe de carcasse. Ainsi, en réduisant le nombre de nappes de carcasse, on réduit le coût, la masse mais également l'hystérèse et donc la résistance au roulement du pneumatique. En outre, la présence d'une seule nappe de carcasse permet d'obtenir un pneumatique dont l'armature de carcasse est plus souple qu'un pneumatique dont l'armature de carcasse comprend plusieurs nappes de carcasse. Ainsi, on limite la raideur verticale du pneumatique.

Dans un mode de réalisation, le pneumatique comprend un sommet prolongé radialement vers l'intérieur par deux flancs, chaque flanc étant prolongé radialement vers l'intérieur par deux bourrelets comportant chacun au moins une structure annulaire de renfort, l'armature de carcasse est ancrée dans chacun des bourrelets par un retournement autour de la structure annulaire de renfort.

De préférence, les éléments de renfort de la nappe de carcasse sont agencés côte à côte parallèlement les uns aux autres selon une direction principale sensiblement perpendiculaire à la direction générale selon laquelle les éléments de renfort de la nappe de carcasse s'étendent, la direction générale faisant un angle allant de 80° à 90° avec la direction circonférentielle du pneumatique.

Dans un autre mode de réalisation, le pneumatique comprend une armature de sommet disposée radialement extérieure à l'armature de carcasse, l'armature de sommet comprenant une armature de travail comprenant au moins une et de préférence deux nappes de travail. Optionnellement, chaque nappe de travail comprend plusieurs éléments de renfort de travail, de préférence métalliques, agencés côte à côte sensiblement parallèlement les uns aux autres. De tels éléments de renfort de travail forment un angle allant de 10° à 45° avec la direction circonférentielle du pneumatique. Avantageusement, les éléments de renfort de travail sont croisés d'une nappe de travail par rapport à l'autre.

De préférence, l'armature de sommet comprend une armature de frettage disposée radialement extérieure à l'armature de travail. Avantageusement, la nappe de frettage comprend des éléments de renfort de frettage, de préférence textile, agencés côte à côte sensiblement parallèlement les uns aux autres. De tels éléments de renfort de frettage forment un angle au plus égal à 10°, de préférence allant de 5° à 10° avec la direction circonférentielle du pneumatique.

Dans la présente demande, on entend par textile, de manière très générale, tout matériau en une matière autre que métallique, qu'elle soit naturelle comme synthétique, susceptible d'être transformée en fil, fibre ou film par tout procédé de transformation approprié. On peut citer par exemple, sans que les exemples ci-après soient limitatifs, un procédé de filage de polymère tel que par exemple filage au fondu, filage en solution ou filage de gel.

Bien que des matériaux en matière non polymérique (par exemple en matière minérale telle que du verre ou en matière organique non polymérique telle que carbone) soient compris dans la définition de matériau textile, l'invention est préférentiellement mise en œuvre avec des matériaux en matière polymérique, tant du type thermoplastique que du type non thermoplastique.

A titre d'exemples de matières polymériques, du type thermoplastiques ou non, on citera par exemple les celluloses, notamment la rayonne, les alcools polyvinyliques (en abrégé « PVA »), les polycétones, les aramides (polyamides aromatiques), les polyesters aromatiques, les polybenzazoles (en abrégé « PBO »), les polyimides, les polyesters, notamment ceux choisis parmi PET (polyéthylène téréphthalate), PEN (polyéthylène naphthalate), PBT (polybutylène téréphthalate), PBN (polybutylène naphthalate), PPT (polypropylène téréphthalate), PPN (polypropylène naphthalate).

De préférence, le pneumatique comprend une bande de roulement agencée radialement extérieure à l'armature de sommet et destinée à être en contact avec le sol lors du roulage du pneumatique.

Dans certains modes de réalisation, la nappe de carcasse est obtenue à partir du composite par conformation d'une ébauche de pneumatique. Dans ces modes de réalisation, on dispose d'un cylindre de confection présentant une forme générale toroïdale autour d'un axe du cylindre, le cylindre présentant une surface de pose au contact de laquelle on enroule le composite selon l'invention qui forme alors un enroulement cylindrique axialement et circonférentiellement continu. Le composite peut être posé directement au contact de la surface de pose ou bien sur une nappe radialement intérieure, par exemple une nappe d'étanchéité, elle-même enroulée au contact de la surface de pose. Dans la plupart des modes de réalisation, le composite est déposé selon un seul tour d'enroulement cylindrique. Optionnellement, on dispose d'autres nappes sur le composite.

Puis, on écarte radialement la surface de pose de l'axe du cylindre, par exemple par pressurisation par un gaz de gonflage d'un espace annulaire intérieur à la surface de pose, par exemple par de l'air. Cette étape est appelée conformation car on déforme l'ébauche de façon à obtenir une forme adaptée à la pose ultérieure de l'armature de sommet et de la bande de roulement. Cette conformation fait varier la densité d'élément de renfort de la nappe de carcasse obtenue à partir du composite selon l'invention selon que l'on se situe dans le bourrelet ou radialement sous l'armature de sommet. On obtient alors une ébauche conformée de pneumatique.

Ensuite, on dispose l'armature de sommet et la bande de roulement sur l'ébauche conformée de pneumatique.

Enfin, on rapproche radialement la surface de pose de l'axe du cylindre, par exemple par dépressurisation de l'espace annulaire.

On obtient alors le pneumatique à l'état cru. Enfin, on réticule le pneumatique, par exemple par vulcanisation, afin d'obtenir le pneumatique à l'état cuit.

Dans certains modes de réalisation, le pneumatique présente un rapport d'aspect allant de 30 à 55 et de préférence de 30 à 50. Le rapport d'aspect ou rapport d'aspect nominal est le rapport exprimé en pourcentage de la hauteur de la section du pneumatique sur la largeur nominale de la section du pneumatique tel que défini dans le document « Engineering Design Information », 2010, de l'ETRTO (European Tyre and Rim Technical Organisation), paragraphe D, page GI.5. Toute chose étant égale par ailleurs, un pneumatique est d'autant plus sensible aux aléas routiers, notamment ceux impliquant un pincement de la nappe de carcasse (appelé en anglais « pinch shock »), que ce pneumatique présente un petit rapport d'aspect. Ainsi, les pneumatiques présentant un rapport d'aspect inférieur ou égal à 55 sont particulièrement sensibles aux pincements. De façon surprenante, les pneumatiques présentant des rapports d'aspect inférieurs ou égaux à 55 comprenant des éléments de renfort de nappe de carcasse selon l'invention ne sont pas plus sensibles que des pneumatiques analogues présentant des rapports d'aspect plus importants, par exemple supérieurs à 55, contrairement à des pneumatiques de l'état de la technique, comprenant par exemple des éléments de renfort de nappe de carcasse en polyester, présentant une extrême sensibilité au pincement pour des rapports d'aspect inférieurs ou égaux à 55 alors que cette sensibilité est moyenne pour des pneumatiques analogues présentant des rapports d'aspect plus importants, par exemple supérieurs à 55.

Dans d'autres modes de réalisation, le pneumatique présente un rapport d'aspect supérieur ou égal à 55, de préférence allant de 55 à 75, plus préférentiellement de 60 à 70. Un pneumatique présentant un tel rapport d'aspect est généralement utilisé sur des véhicules de type 4x4 ou SUV et est amené à rencontrer des usages particuliers, notamment des usages hors la route et/ou à forte charge. Les pneumatiques de l'état de la technique présentant un tel rapport d'aspect comprennent une armature de carcasse comprenant deux nappes de carcasses afin de satisfaire ces usages particuliers. Grâce au composite décrit précédemment, de tels pneumatiques peuvent ne comprendre qu'une unique nappe de carcasse et supporter les usages particuliers qu'ils sont amenés à rencontrer.

Dans un mode de réalisation, le pneumatique comprend deux flancs, chaque flanc présente une épaisseur moyenne mesurée dans un plan tangentiel médian du pneumatique, inférieure à 10 mm. Un tel pneumatique n'est pas adapté pour un roulage à plat. Cette épaisseur de flanc est la distance mesurée entre la surface externe du pneumatique et la surface interne du pneumatique dans le plan tangentiel médian. Le plan tangentiel médian du pneumatique est le plan qui est perpendiculaire au plan circonférentiel médian et étant radialement équidistant d'un premier plan tangentiel passant par la surface externe de la bande de roulement et d'un deuxième plan tangentiel passant par l'extrémité radialement interne du pneumatique.

Dans un autre mode de réalisation, le pneumatique est adapté pour un roulage à plat. Généralement, la capacité du pneumatique à être adapté pour un roulage à plat est indiquée sur le flanc du pneumatique, notamment par un logo ou une appellation distinctive, par exemple « SSR » (pour Self Supporting Runflat), « SST » (pour Self Supporting Tyre), « RFT », « ROF » (pour Run On Flat), « RME » (pour Extended Mobility Technologie), « Run-On-Flat » ou encore « ZP » (pour Zero Pressure) ou plus simplement « Run Flat ».

De préférence, dans le mode de réalisation dans lequel le pneumatique est adapté pour un roulage à plat, le pneumatique comprend un insert de flanc disposé axialement à l'intérieur de l'armature de carcasse.

Préférentiellement, dans le mode de réalisation dans lequel le pneumatique est adapté pour un roulage à plat, le pneumatique comprend deux flancs, chaque flanc présente une épaisseur moyenne mesurée dans un plan tangentiel médian du pneumatique, supérieure ou égale à 10 mm. L'épaisseur de chaque flanc et le plan tangentiel médian sont tels que définis précédemment.

En effet, depuis quelques années, les manufacturiers de pneumatiques cherchent à supprimer la nécessité de la présence d'une roue de secours à bord du véhicule tout en garantissant la possibilité au véhicule de poursuivre sa route malgré une perte importante ou totale de pression d'un ou plusieurs pneumatiques. Cela permet par exemple de se rendre à un point de dépannage sans devoir s'arrêter, dans des circonstances souvent hasardeuses, pour installer la roue de secours.

Une solution envisagée est l'utilisation de pneumatiques adaptés pour un roulage à plat et pourvus de flancs autoporteurs.

Lorsque la pression de gonflage est proche de la pression de service (on parle alors de mode « roulage normal »), il est souhaitable que le pneumatique présente des performances, dites performances « RMG » (Roulage Mode Gonflé), aussi élevées que possible. Ces performances RMG comprennent, entre autres, la masse, la résistance au roulement ou encore le confort.

Lorsque la pression de gonflage est significativement abaissée par rapport à la pression de service, voire même nulle (on parle alors de mode « roulage à plat »), le pneumatique doit permettre de rouler une distance donnée à une vitesse donnée. Cette performance, dite performance « RME » (Roulage Mode Etendu), est requise par la législation ou par les constructeurs automobiles pour permettre au manufacturier de présenter le pneumatique comme adapté pour le roulage à plat. Cette performance est largement tributaire de l'endurance des éléments de renfort de l'armature de carcasse, endurance suffisante avec les éléments de renfort selon l'invention.

En effet, l'élément de renfort présente un module relativement faible aux faibles déformations (en mode roulage normal), en l'espèce celui du brin de polyester, qui s'avère compatible avec les performances RMG. L'élément de renfort présente un module relativement élevé aux fortes déformations (en mode roulage à plat), en l'espèce celui du brin de polyamide aromatique ou copolyamide aromatique, qui s'avère suffisant pour assurer, à lui seul, la performance RME.

L'invention sera mieux comprise à la lumière de la description qui va suivre donnée uniquement à titre d'exemple non limitatif et faite en se référant aux dessins dans lesquels :

- la figure 1 est une vue en coupe radiale d'un pneumatique selon un premier mode de réalisation de l'invention ;
- la figure 2 illustre un composite permettant d'obtenir une nappe de carcasse du pneumatique de la figure 1 ;
- la figure 3a illustre est une vue en coupe selon le plan III-III' du composite de la figure 2 ;
- la figure 3b est une vue analogue à celle de la figure 3a d'un composite de l'état de la technique ;
- la figure 4 illustre une vue en détail d'un élément de renfort du pneumatique de la figure 1 et du composite de la figure 2 ;
- la figure 5 est un agrandissement d'une vue en coupe d'un élément de renfort selon l'invention ; et
- les figures 6 et 7 sont des vues analogues à celle de la figure 1 de pneumatiques selon respectivement des deuxième et troisième modes de réalisation de l'invention.

Dans l'emploi du terme « radial », il convient de distinguer plusieurs utilisations différentes du mot par l'homme du métier. Premièrement, l'expression se réfère à un rayon du pneumatique. C'est dans ce sens qu'on dit d'un point A qu'il est « radialement intérieur » à un point B (ou « radialement à l'intérieur » du point B) s'il est plus près de l'axe de rotation du pneumatique que le point B. Inversement, un point C est dit « radialement extérieur à » un point D (ou « radialement à l'extérieur » du point D) s'il est plus éloigné de l'axe de rotation du pneumatique que le point D. On dira qu'on avance « radialement vers l'intérieur (ou l'extérieur) » lorsqu'on avance en direction des rayons plus petits (ou plus grands). Lorsqu'il est question de distances radiales, ce sens du terme s'applique également.

Par « coupe radiale » ou « section radiale » on entend ici une coupe ou une section selon un plan qui comporte l'axe de rotation du pneumatique.

Le « plan circonférentiel médian » M du pneumatique est le plan qui est normal à l'axe de rotation du pneumatique et qui se situe à équidistance des structures annulaires de renfort de chaque bourrelet.

Comme déjà décrit ci-dessus, le « plan tangentiel médian » T du pneumatique est le plan qui est qui perpendiculaire au « plan circonférentiel médian » M et radialement équidistant d'un premier plan tangentiel T1 passant par la surface externe de la bande de roulement et d'un deuxième plan tangentiel T2 passant par l'extrémité radialement interne du pneumatique.

Une direction « axiale » est une direction parallèle à l'axe de rotation du pneumatique.

Une direction « circonférentielle » est une direction qui est perpendiculaire à la fois à un rayon du pneumatique et à la direction axiale.

Comme déjà décrit ci-dessus, F est l'épaisseur moyenne du flanc du pneumatique mesurée dans le plan tangentiel médian, c'est-à-dire la distance mesurée entre la paroi externe et la paroi interne du pneumatique dans le plan tangentiel médian. Cette épaisseur est moyenne car calculée sur 5 valeurs mesurées sur 5 sections équiréparties circonférentiellement sur le pneumatique.

Dans la présente demande, sauf indication contraire, tout intervalle de valeurs désigné par l'expression « de a à b » signifie le domaine de valeurs allant de la borne « a » jusqu'à la borne « b » c'est-à-dire incluant les bornes strictes « a » et « b ».

## PNEUMATIQUE SELON UN PREMIER MODE DE REALISATION DE L'INVENTION

Dans les figures, on a représenté un repère X, Y, Z correspondant aux directions habituelles respectivement axiale (X), radiale (Y) et circonférentielle (Z) d'un pneumatique.

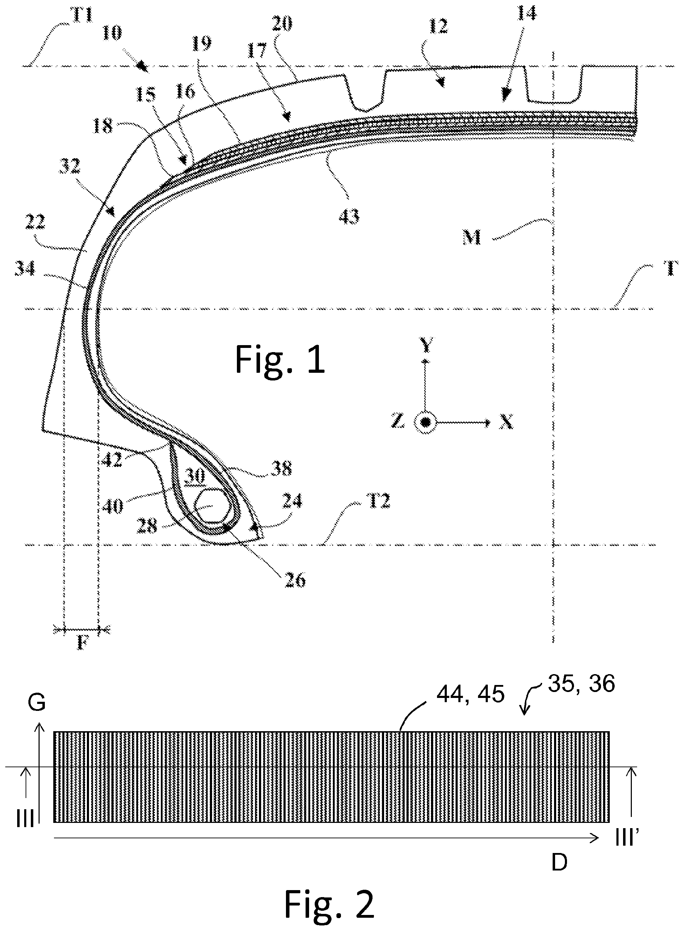

On a représenté schématiquement sur la figure 1, une vue en coupe radiale, d'un pneumatique selon un premier mode de réalisation de l'invention et désigné par la référence générale 10. Le pneumatique 10 est sensiblement de révolution autour d'un axe sensiblement parallèle à la direction axiale X. Le pneumatique 10 est ici destiné à un véhicule de tourisme. Le pneumatique 10 présente un rapport d'aspect allant de 30 à 55 et de préférence de 30 à 50. En l'espèce, le pneumatique présente la dimension 245/40 R18 et donc un rapport d'aspect égal à 40. Le pneumatique 10 selon le premier mode de réalisation n'est pas adapté à un roulage à plat.

Le pneumatique 10 comporte un sommet 12 comprenant une armature de sommet 14 comprenant une armature de travail 15 comprenant deux nappes de travail 16, 18 d'éléments de renfort de travail et une armature de frettage 17 comprenant une nappe de frettage 19 d'éléments de renfort de frettage. L'armature de sommet 14 est surmontée d'une bande de roulement 20 agencée radialement extérieure à l'armature de sommet 14. Ici, l'armature de frettage 17, ici la nappe de frettage 19, est radialement intercalée entre l'armature de travail 15 et la bande de roulement 20.

Le pneumatique comprend également deux flancs 22 prolongeant le sommet 12 radialement vers l'intérieur. Le pneumatique 10 comporte en outre deux bourrelets 24 radialement intérieur aux flancs 22 et comportant chacun une structure annulaire de renfort 26, en l'occurrence une tringle 28, surmontée d'une masse de gomme 30 de bourrage sur tringle, ainsi qu'une armature de carcasse radiale 32.

L'armature de carcasse 32 comporte au moins une nappe de carcasse comprenant plusieurs éléments de renfort, la nappe étant ancrée à chacun des bourrelets 24 par un retournement autour de la tringle 28, de manière à former dans chaque bourrelet 24 un brin aller 38 s'étendant depuis les bourrelets à travers les flancs vers le sommet 12, et un brin retour 40, l'extrémité radialement extérieure 42 du brin retour 40 étant radialement à l'extérieur de la structure annulaire de renfort 26. L'armature de carcasse 32 s'étend ainsi depuis les bourrelets 24 à travers les flancs 22 jusque dans le sommet 12. L'armature de carcasse 32 est agencée radialement à l'intérieur de l'armature de sommet 14 et de l'armature de frettage 17. L'armature de carcasse 32 comprend une seule nappe carcasse 34.

Le pneumatique 10 comprend également une couche interne 43 d'étanchéité, de préférence en butyl, située axialement intérieure aux flancs 22 et radialement intérieure à l'armature de sommet 14 et s'étendant entre les deux bourrelets 24.

L'épaisseur moyenne F de chaque flanc 22 du pneumatique 10 mesurée dans le plan tangentiel médian T est inférieure à 10 mm. En l'espèce, l'épaisseur moyenne F est ici égale à 5 mm.

Chaque nappe de travail 16, 18, de frettage 19 et de carcasse 34 comprend une composition polymérique dans laquelle sont noyés des éléments de renfort de la nappe correspondante. Chaque composition polymérique, ici une composition élastomérique, des nappes de travail 16, 18, de frettage 19 et de carcasse 34 est réalisée dans une composition conventionnelle pour calandrage d'éléments de renfort comprenant de façon classique un élastomère diénique, par exemple du caoutchouc naturel, une charge renforçante, par exemple du noir de carbone et/ou de la silice, un système de réticulation, par exemple un système de vulcanisation, de préférence comprenant du soufre, de l'acide stéarique et de l'oxyde de zinc, et éventuellement un accélérateur et/ou retardateur de vulcanisation et/ou divers additifs.

## COMPOSITE SELON L'INVENTION

On va maintenant décrire en référence aux figures 2, 3a et 4 un composite à partir duquel est obtenue la nappe de carcasse 34.

Le composite comprend plusieurs éléments de renfort. Les éléments de renfort sont agencés côte à côte parallèlement les uns aux autres selon une direction principale D sensiblement perpendiculaire à la direction générale G selon laquelle les éléments de renfort de la nappe de carcasse s'étendent, la direction générale G faisant un angle allant de 80° à 90° avec la direction circonférentielle Z du pneumatique 10 une fois le composite formant la nappe de carcasse 34 au sein du pneumatique 10. En l'espèce, la direction générale G fait un angle sensiblement égal à 90° avec la direction circonférentielle Z du pneumatique 10 une fois le composite formant la nappe de carcasse 34 au sein du pneumatique 10.

On va décrire ci-dessous des éléments de renfort selon des première et deuxième variantes, respectivement désigné par les références 44, 45 et leurs assemblages respectifs désignés par les références 47, 49. On va également décrire des composites selon des première et deuxième variantes correspondant à chacune des variantes des éléments de renfort et respectivement désigné par les références 35, 36.

Nature des brins de chaque élément de renfort

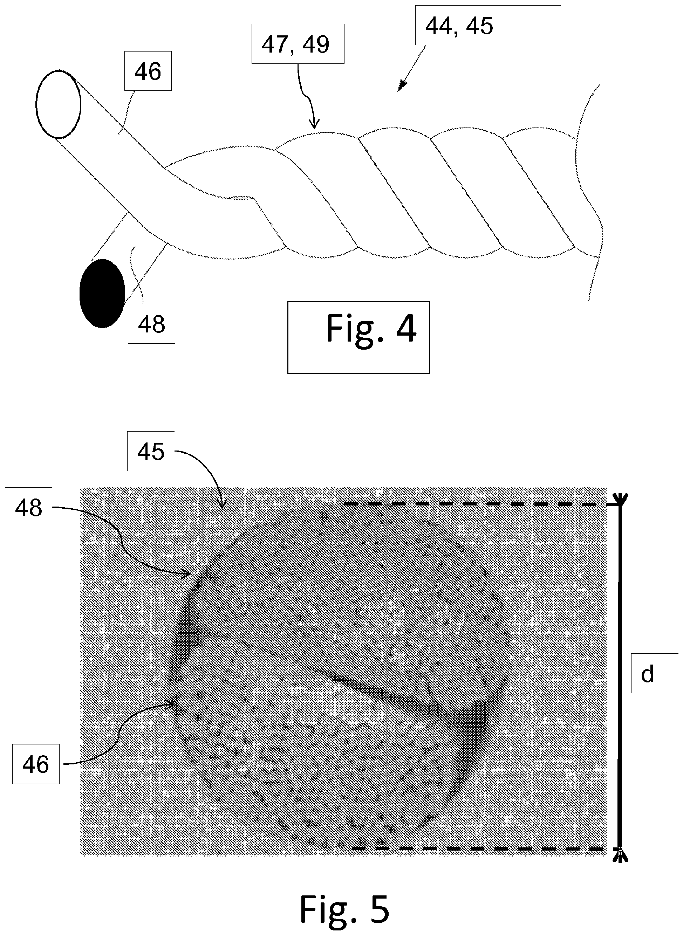

Comme représenté schématiquement sur la figure 4, chaque élément de renfort 44, 45 comprend un assemblage 47, 49 constitué d'un brin multifilamentaire en polyamide aromatique ou copolyamide aromatique 46 et d'un brin multifilamentaire en polyester 48, les deux brins 46, 48 étant enroulés en hélice l'un autour de l'autre. Chaque élément de renfort 44, 45 est équilibré en torsions. A des fins de précision de la description, la figure 5 est une vue en coupe de l'élément de renfort 45 conforme à l'invention et sur laquelle on distingue les monofilaments de chacun des brins.

Le polyamide aromatique choisi est ici préférence un para-aramide, connu sous la dénomination commerciale Twaron 1000 de la société Teijin. Le polyester est le polyéthylène téréphtalate (PET), connu sous la dénomination commerciale PET HMLS (High Module Low Shrinkage) des sociétés Hyosung ou Hailide.

Dans certains modes de réalisation non représentés, chaque élément de renfort 44, 45 comprend, en plus de l'assemblage 47, 49, une couche d'une composition adhésive revêtant l'assemblage 47, 49.

Titre de chaque élément de renfort

Le titre du brin multifilamentaire 46 en polyamide aromatique ou copolyamide aromatique va de 140 à 210 tex, de préférence de 150 à 190 tex, plus préférentiellement de 160 à 180 tex.

Dans la première variante de l'élément de renfort 44, le titre du brin 46 est égal à 167 tex. Dans la deuxième variante de l'élément de renfort 45, le titre du brin 46 est également égal à 167 tex.

Le titre du brin multifilamentaire 48 en polyester va de 100 à 210 tex, de préférence de 120 à 190 tex, plus préférentiellement de 130 à 180 tex.

Dans la première variante de l'élément de renfort 44, le titre du brin 48 est égal à 144 tex. Dans la deuxième variante de l'élément de renfort 45, le titre du brin multifilamentaire de polyester va encore plus préférentiellement de 160 à 180 tex. Dans la deuxième variante de l'élément de renfort 45, le titre du brin 48 est égal à 167 tex.

Torsion de chaque élément de renfort

La torsion de chaque élément de renfort 44, 45 va de 250 à 405 tours par mètre, de préférence de 250 à 390 tours par mètre, plus préférentiellement de 250 à 380 tours par mètre.

Dans la première variante de l'élément de renfort 44, la torsion de l'élément de renfort va de 250 à 340 tours par mètre, de préférence de 260 à 325 tours par mètre, plus préférentiellement de 275 à 305 tours par mètre. En l'espèce, la torsion de l'élément de renfort 44 est égale à 290 tours par mètre.

Dans la deuxième variante de l'élément de renfort 45, la torsion de l'élément de renfort va de 275 à 365 tours par mètre, de préférence de 275 à 350 tours par mètre, plus préférentiellement de 300 à 330 tours par mètre. En l'espèce, la torsion de l'élément de renfort 45 est égale à 315 tours par mètre.

Modules initial et final de chaque élément de renfort

Le module initial en extension de chaque élément de renfort 44, 45 va de 5,0 à 10,5 cN/tex, de préférence de 7,3 à 9,9 cN/tex, plus préférentiellement de 7,3 à 9,0 cN/tex.

Dans la première variante de l'élément de renfort 44, le module initial en extension de l'élément de renfort va de 7,5 à 9,9 cN/tex, de préférence de 7,8 à 9,0 cN/tex, plus préférentiellement de 8,0 à 8,5 cN/tex. En l'espèce, le module initial de l'élément de renfort 44 est égal à 8,2 cN/tex.

Dans la deuxième variante de l'élément de renfort 45, le module initial en extension de l'élément de renfort va avantageusement de 5,7 à 8,5 cN/tex, de préférence de 6,2 à 7,8 cN/tex, plus préférentiellement de 6,8 à 7,5 cN/tex. En l'espèce, le module initial de l'élément de renfort 45 est égal à 7,2 cN/tex.

Le module final en extension de l'élément de renfort 44, 45 va de 14,0 à 21,5 cN/tex, de préférence de 14,8 à 20,9 cN/tex, plus préférentiellement de 16,6 à 20,0 cN/tex.

Dans la première variante de l'élément de renfort 44, le module final en extension de l'élément de renfort va de 17,5 à 21,0 cN/tex, de préférence de 17,9 à 20,8 cN/tex et plus préférentiellement de 18,2 à 19,5 cN/tex. En l'espèce, le module final de l'élément de renfort 44 est égal à 18,9 cN/tex.

Dans la deuxième variante de l'élément de renfort 45, le module final en extension de l'élément de renfort va avantageusement va de 15,0 à 19,0 cN/tex, de préférence de 15,8 à 18,5 cN/tex, plus préférentiellement de 16,6 à 17,9 cN/tex. En l'espèce, le module final de l'élément de renfort 45 est égal à 16,9 cN/tex.

Le rapport du module final sur le module initial va de 2,10 à 2,75, de préférence de 2,15 à 2,65 et plus préférentiellement de 2,20 à 2,45.

Dans la première variante de l'élément de renfort 44, le rapport du module final sur le module initial va de 2,10 à 2,40, de préférence de 2,15 à 2,35 et plus préférentiellement de 2,20 à 2,35. En l'espèce, le rapport du module final sur le module initial de l'élément de renfort 44 est égal à 2,29.

Dans la deuxième variante de l'élément de renfort 45, le rapport du module final sur le module initial va avantageusement de 2,15 à 2,45, de préférence de 2,20 à 2,40, plus préférentiellement de 2,25 à 2,40. En l'espèce, le rapport du module final sur le module initial de l'élément de renfort 45 est égal à 2,34.

Facteur de torsion de chaque élément de renfort

Le facteur de torsion K de chaque élément de renfort 44, 45 va de 5,2 à 6,5, de préférence de 5,2 à 6,3, plus préférentiellement de 5,2 à 6,1.

Dans la première variante de l'élément de renfort 44, le facteur de torsion K va de 5,2 à 5,5, de préférence de 5,3 à 5,5 et encore plus préférentiellement de 5,3 à 5,4. En l'espèce, le facteur de torsion K de l'élément de renfort 44 est égal à 5,3.

Dans la deuxième variante de l'élément de renfort 45, le facteur de torsion K va de 5,5 à 6,5, de préférence appartenant à l'intervalle ]5,5 ; 6,5] (c'est-à-dire excluant la valeur 5,5), préférentiellement de 5,6 à 6,1 et encore plus préférentiellement de 5,9 à 6,1. En l'espèce, le facteur de torsion K de l'élément de renfort 45 est égal à 6,0.

Caractéristiques géométriques du composite

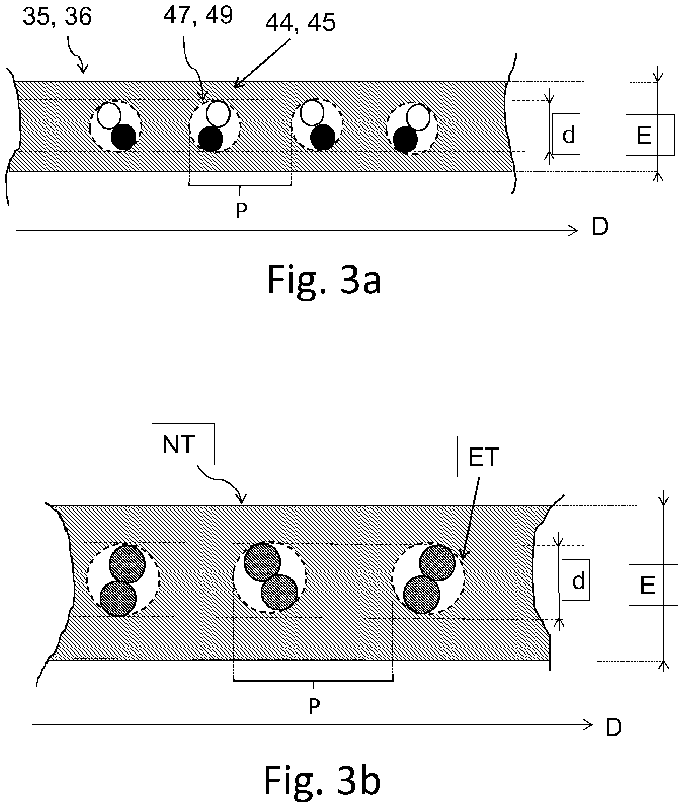

En revenant à la figure 3a, chaque composite 35, 36 présente une épaisseur E et chaque élément de renfort 44, 45 présente un diamètre d. Le diamètre d correspond au diamètre du cercle théorique dans lequel est inscrit l'élément de renfort. Sur cette figure 3a, la représentation de chaque brin est volontairement schématique à des fins de simplification de la description. La figure 5 illustre l'élément de renfort 45 tel qu'il est observable en réalité. Lorsqu'il est observé, l'élément de renfort de renfort 44 est visuellement analogue (à la différence près du titre du brin multifilamentaire de polyester).

Le diamètre de chaque élément de renfort 44, 45 est inférieur ou égal à 0,95 mm, de préférence inférieur ou égal à 0,80 mm, plus préférentiellement inférieur ou égal à 0,70 mm. Dans la première variante de l'élément de renfort 44, d=0,65 mm. Dans la deuxième variante de l'élément de renfort 45, d=0,67 mm.

L'épaisseur E de chaque composite 35, 36 est inférieure ou égale à 1,45 mm, de préférence, inférieure ou égale à 1,30 mm, plus préférentiellement inférieure ou égale à 1,20 mm. Dans la première variante de l'élément de renfort 44, E=1,16 mm. Dans la deuxième variante de l'élément de renfort 45, E=1,10 mm.

Ainsi, le rapport d/E est strictement inférieur à 0,65, de préférence inférieur ou égal à 0,62. Dans la première variante de l'élément de renfort 44, d/E est plus préférentiellement inférieur ou égal à 0,58. Ainsi, dans la première variante de l'élément de renfort 44, d/E=0,56 et dans la deuxième variante de l'élément de renfort 45, d/E=0,61.

La densité de chaque élément de renfort 44, 45 dans chaque composite 35, 36 va de 90 à 130 éléments de renfort par décimètre de chaque composite 35, 36, de préférence de 100 à 125 éléments de renfort par décimètre de chaque composite 35, 36, plus préférentiellement de 105 à 120 éléments de renfort par décimètre de chaque composite 35, 36. Dans la première variante du composite 35, la densité d'éléments de renfort 44 est égale à 116 éléments de renfort par décimètre de composite 35, et dans la deuxième variante du composite 36, la densité d'éléments de renfort 45 est égale à 110 éléments de renfort par décimètre de composite 36.

On a représenté sur la figure 3a, le pas P qui est la distance séparant deux points analogues de deux éléments de renfort 44, 45 adjacents. Le pas P est généralement appelé pas de pose des éléments de renfort dans le composite. Le pas P et la densité d'élément de renfort par décimètre de composite sont tels que la densité d'élément de renfort par décimètre de composite est égale à 100/P.

La densité d'éléments de renfort et l'épaisseur décrites ci-dessus sont, comme expliqué précédemment, la densité d'éléments de renfort 44, 45 et l'épaisseur E de chaque composite 35, 36. Dans le pneumatique 10, la nappe de carcasse 34 étant obtenue à partir de chaque composite 35, 36 par conformation d'une ébauche de pneumatique, la densité d'éléments de renfort ainsi que l'épaisseur de la nappe de carcasse 34 sont différentes de celles du composite et varient selon que l'on se trouve plus ou moins proche de l'axe de révolution du pneumatique. Ces variations sont notamment dépendantes du taux de conformation de l'ébauche du pneumatique mais également de sa géométrie. A partir notamment du taux de conformation de l'ébauche du pneumatique et de sa géométrie, l'homme du métier saura déterminer les caractéristiques du composite correspondant.

## PROCEDE DE FABRICATION DE L'ELEMENT DE RENFORT

Comme décrit précédemment, chaque élément de renfort 44, 45 est équilibré en torsions, c'est-à-dire que les deux brins multifilamentaires sont enroulés avec une torsion sensiblement identique et que la torsion des monofilaments de chaque brin multifilamentaire est sensiblement nulle. Dans la première variante de l'élément de renfort 44, dans une première étape, chaque filé de monofilaments (en anglais « yarn ») est tout d'abord individuellement tordu sur lui-même selon une torsion initiale égale à 290 tours par mètre dans une direction donnée, ici le sens Z, pour former un brin ou surtors (en anglais « strand »). Puis, au cours d'une seconde étape, les deux brins, sont ensuite retordus ensemble selon une torsion finale égale à 290 tours par mètre en direction S pour l'obtention de l'assemblage de l'élément de renfort (en anglais « cord »). On fabrique l'assemblage de l'élément de renfort 45 selon la deuxième variante *mutatis mutandis.*

Dans des étapes ultérieures, chaque assemblage est revêtu d'une composition adhésive, par exemple une composition adhésive de type RFL (acronyme pour Résorcinol-Formaldéhyde-Latex) et subit des étapes de traitement thermiques afin de faire réticuler, au moins en partie, la composition adhésive.

## PROCEDE DE FABRICATION DU COMPOSITE SELON L'INVENTION

On fabrique chaque composite 35, 36 en noyant plusieurs éléments de renfort 44, 45 dans la composition d'élastomère, par exemple par calandrage. Durant une telle étape de calandrage, bien connue de l'homme du métier, on fait on fait défiler des éléments de renforts et on amène deux bandes réalisées dans une composition d'élastomère, appelées skims, de part et d'autre des éléments de renfort de façon à prendre en sandwich les éléments de renforts entre les deux skims. On noie ainsi les éléments de renfort dans la composition d'élastomère.

## PROCEDE DE FABRICATION DU PNEUMATIQUE SELON L'INVENTION

Le procédé de fabrication du pneumatique est celui utilisé classiquement par l'homme du métier. Au cours de ce procédé et comme déjà décrit précédemment, on dispose successivement, lors d'une première série d'étapes d'assemblages, différentes nappes et composites, dont le composite selon l'invention destiné à former la nappe de carcasse 34 du pneumatique 10. Puis, on conforme l'ébauche ainsi obtenue. Ensuite, on dispose d'autres nappes et composites destinés à former le sommet 12 du pneumatique 10. Enfin, on vulcanise l'ébauche ainsi obtenue pour obtenir le pneumatique 10.

## PNEUMATIQUE SELON UN DEUXIEME MODE DE REALISATION DE L'INVENTION

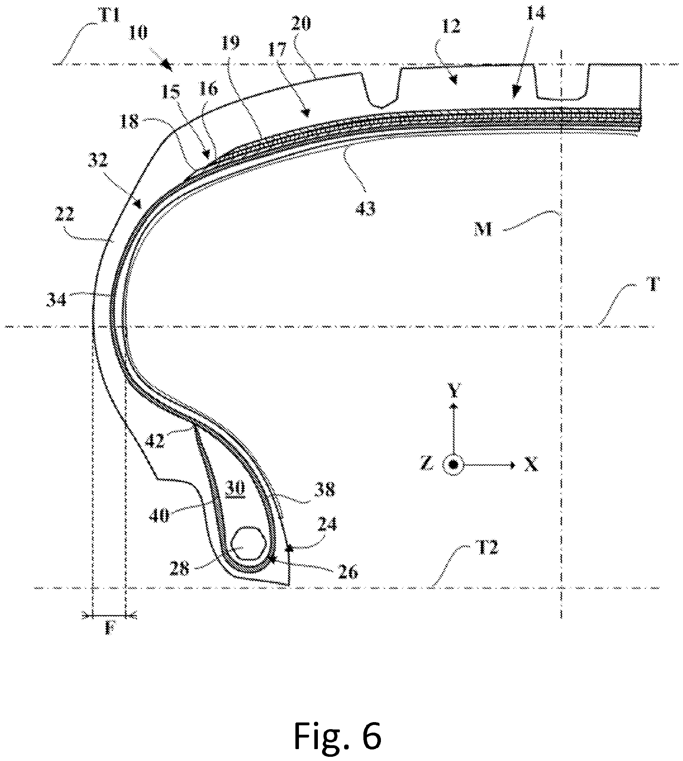

On a représenté en figure 6, un pneumatique selon un deuxième mode de réalisation de l'invention. Les éléments analogues à ceux du premier mode de réalisation sont désignés par des références identiques.
A la différence du pneumatique 10 selon le premier mode de réalisation, le pneumatique 10 selon le deuxième mode de réalisation présente un rapport d'aspect supérieur ou égal à 55, de préférence allant de 55 à 75. En l'espèce, le pneumatique présente la dimension 205/55 R16 et donc un rapport d'aspect égal à 55.

## PNEUMATIQUE SELON UN TROISIEME MODE DE REALISATION DE L'INVENTION

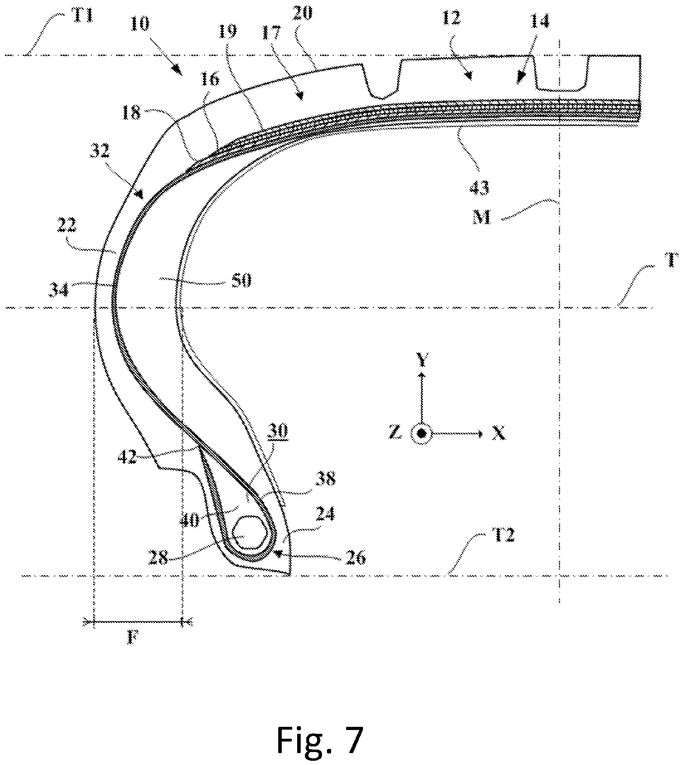

On a représenté en figure 7, un pneumatique selon un troisième mode de réalisation de l'invention. Les éléments analogues à ceux du premier mode de réalisation sont désignés par des références identiques.
A la différence du pneumatique 10 selon le premier mode de réalisation, le pneumatique 10 selon le troisième mode de réalisation est un pneumatique adapté pour un roulage à plat. Ainsi, le pneumatique est agencé de façon à supporter une charge correspondant à une partie du poids du véhicule lors d'une situation de roulage à plat, c'est-à-dire avec une pression sensiblement égale à la pression atmosphérique.
Le pneumatique 10 selon le troisième mode de réalisation comprend deux flancs autoporteurs 22 prolongeant le sommet 12 radialement vers l'intérieur. A cet effet, le pneumatique 10 comporte deux inserts de flanc 50, axialement intérieurs à l'armature de carcasse 32 et axialement extérieurs à la couche interne d'étanchéité 43. Ainsi, les inserts de flanc 50 sont disposés axialement entre l'armature de carcasse 32 et la couche interne d'étanchéité 43.
Ces inserts 50 avec leur section radiale caractéristique en forme de croissant sont destinés à renforcer les flancs 22. Chaque insert 50 est réalisé dans une composition élastomérique spécifique. Le document WO 02/096677 donne plusieurs exemples de compositions élastomériques spécifiques pouvant être utilisées pour former un tel insert. Chaque insert de flanc 50 est susceptible de contribuer à supporter une charge correspondant à une partie du poids du véhicule lors d'une situation de roulage à plat.
A la différence du premier mode de réalisation du pneumatique, chaque flanc 22 présente une épaisseur moyenne F mesurée dans le plan tangentiel médian T supérieure ou égale à 10 mm. En l'espèce, l'épaisseur moyenne F est ici égale à 17 mm.

## MESURES ET TESTS COMPARATIFS

A titre d'exemple comparatif, on a représenté sur la figure 3b, un composite de l'état de la technique désigné par la référence générale NT d'un pneumatique de l'état de la technique. Le composite NT comprend des éléments de renfort ET comprenant chacun un assemblage constitué de deux brins multifilamentaires en polyester assemblés ensemble et enroulés en hélice l'un autour de l'autre à une torsion de 270 tours par mètre. Chaque élément de renfort ET est équilibré en torsions. Chaque brin multifilamentaire de l'élément de renfort ET présente un titre égal à 334 tex.

Comparaison des éléments de renfort

On a résumé dans le tableau 1 les caractéristiques des éléments de renfort 44, 45 du pneumatique 10 selon l'invention et de l'élément de renfort ET de l'état de la technique. Les mesures de force à rupture sont effectuées en traction selon la norme ISO 6892 de 1984.

**Tableau 1**

| | ET | 44 | 45 |
|---|---|---|---|
| **Nature des brins** | PET/PET | p-Aramide/PET | p-Aramide/PET |
| **Module initial à 20°C (cN/tex)** | 5,0 | 8,2 | 7,2 |
| **Module final à 20°C (cN/tex)** | 3,6 | 18,9 | 16,9 |
| **Rapport Module final sur Module initial à 20°C** | 0,72 | 2,29 | 2,34 |
| **Torsion (t/m)** | 270 | 290 | 315 |
| **Titre des brins (tex)** | 334/334 | 167/144 | 167/167 |
| **Facteur de torsion K** | 7,3 | 5,3 | 6,0 |
| **Force à Rupture (daN)** | 40 | 36,8 | 39,6 |

On note que les éléments de renfort 44 et 45 présentent des modules initial et final significativement supérieurs à ceux de l'élément de renfort de l'état de la technique ET.

Les forces à ruptures des éléments de renfort 44, 45 sont suffisamment élevées afin de lutter efficacement contre les aléas routier, notamment dans le cas de l'élément de renfort 45 pour lequel la force à rupture est quasiment identique à celle de l'élément de renfort ET.

Comparaison des composites

On a comparé les composites 35, 36 selon l'invention comprenant des éléments de renfort 44, 45 et un composite NT de l'état de la technique comprenant des éléments de renfort ET. Les caractéristiques géométriques de ces composites sont rassemblés dans le tableau 2 ci-dessous.

**Tableau 2**

| Composite | NT | 35 | 36 |
|---|---|---|---|
| **Elément de renfort** | ET | 44 | 45 |
| **Densité (éléments de renfort/dm)** | 80 | 116 | 110 |
| **Diamètre d de l'élément de renfort (mm)** | 0,96 | 0,65 | 0,67 |
| **Epaisseur E du composite (mm)** | 1,47 | 1,16 | 1,10 |
| **Rapport d/E** | 0,65 | 0,56 | 0,61 |
| **Force à rupture du composite (daN/cm)** | 320 | 427 | 436 |

On note que l'élément de renfort ET de l'état de la technique présente un diamètre d largement supérieur à ceux des éléments de renfort 44, 45 des composites selon l'invention. Chaque composite 35, 36 selon l'invention est beaucoup plus fin que le composite NT. Le rapport d/E de chaque composite 35, 36 est plus petit que le rapport d/E du composite de l'état de la technique si bien que chaque composite 35, 36 est plus léger.

On notera qu'en plus d'être plus léger, chaque composite 35, 36 présente une force à rupture largement plus élevée que le composite NT.

Force à rupture des éléments de renfort

On a représenté dans le tableau 3 la force à rupture d'éléments de renfort comprenant un brin multifilamentaire d'aramide (Twaron 1000 de la société Teijin) présentant un titre égal à 167 tex et un brin multifilamentaire de PET (PET HMLS de la société Hyosung) présentant un titre égal à 144 tex, les deux brins étant enroulés en hélice l'un autour de l'autre et chaque élément de renfort étant équilibré en torsions. On a fait varier la torsion de façon à faire varier le facteur de torsion K de 3,7 à 7,0. Les mesures de force à rupture sont effectuées en traction selon la norme ISO 6892 de 1984.

**Tableau 3**

| Facteur de torsion K | 3,7 | 4,0 | 4,2 | 4,6 | 5,0 | 5,3 | 5,5 | 5,6 | 5,9 | 6,3 | 6,6 | 7,0 |
|---|---|---|---|---|---|---|---|---|---|---|---|---|
| Force à Rupture (daN) | 38,1 | 39,3 | 38,5 | 38,2 | 37,0 | 36,8 | 37,0 | 36,6 | 37,0 | 36,8 | 34,2 | 34,9 |

On a représenté ensuite dans le tableau 4 la force à rupture d'éléments de renfort comprenant un brin multifilamentaire d'aramide (Twaron 1000 de la société Teijin) présentant un titre égal à 167 tex et un brin multifilamentaire de PET (PET HMLS de la société Hailide) présentant un titre égal à 167 tex, les deux brins étant enroulés en hélice l'un autour de l'autre et chaque élément de renfort étant équilibré en torsions. On a fait varier la torsion de façon à faire varier le facteur de torsion Kde 4,6 à 7,0. Les mesures de force à rupture sont effectuées en traction selon la norme ISO 6892 de 1984.

**Tableau 4**

| Facteur de torsion K | 4,6 | 4,8 | 5,2 | 5,3 | 5,5 | 5,7 | 6,0 | 6,5 | 7,0 |
|---|---|---|---|---|---|---|---|---|---|
| Force à Rupture (daN) | 42,0 | 41,1 | 40,1 | 40,7 | 40,0 | 39,8 | 39,6 | 39,7 | 37,1 |

Les tableaux 3 et 4 montrent que, pour un titre donné, dans l'intervalle de facteur de torsion K allant de 5,2 à 6,5, la force à rupture de chaque élément de renfort est sensiblement constante. Ainsi, comme décrit précédemment, dans l'intervalle sélectionné de facteur de torsion, le concepteur du pneumatique peut adapter d'autres caractéristiques de l'élément de renfort, notamment la torsion, à l'usage ou aux usages auxquels est destiné le pneumatique, notamment afin de faire varier l'endurance comme expliqué ci-dessous.

Endurance des éléments de renfort

On a comparé l'endurance des éléments de renfort 44, 45 à celle d'autres éléments de renfort aramide/PET I, II et III. Les éléments de renfort 44, 45, I et II sont conformes à l'invention. L'élément de renfort III n'est pas conforme à l'invention. Afin d'évaluer l'endurance, on a noyé des éléments de renfort dans une composition d'élastomère afin de former une éprouvette sous la forme de bande d'épaisseur égale à 30 mm que l'on a fait cycler autour d'un barreau cylindrique. Après 190 000 cycles, on a mesuré la force à rupture finale de chaque élément de renfort. On a alors calculé la déchéance correspondant à la perte, en %, de force à rupture après les 190 000 cycles. Plus la déchéance est élevée, moins l'endurance est élevée. Les résultats des tests ainsi que les caractéristiques des éléments de renfort testés sont rassemblés dans le tableau 5 ci-dessous.

**Tableau 5**

| Elément de renfort | I | II | III | 44 | 45 |
|---|---|---|---|---|---|
| Titre des brins aramide/PET (tex) | 167/167 | 167/167 | 167/144 | 167/144 | 167/167 |
| Facteur de torsion K | 5,3 | 5,7 | 7,0 | 5,3 | 6,0 |
| Force à rupture initiale (daN) | 40,7 | 39,8 | 34,9 | 36,8 | 39,6 |
| Force à rupture finale (daN) | 18,2 | 23,2 | 27,5 | 18,7 | 28,0 |
| Déchéance (%) | 55,3 | 41,7 | 21,2 | 49,2 | 29,3 |

Ces résultats montrent que, pour des titres de brins donnés, sur l'intervalle de facteur de torsion K allant de 5,2 à 6,5, on peut faire varier l'endurance en fonction de l'usage souhaité du pneumatique, par exemple en faisant varier la torsion. Ainsi, le concepteur de pneumatique peut faire varier l'endurance en fonction d'un usage spécifique auquel est destiné le pneumatique, par exemple à un usage sportif en augmentant la torsion, ou bien choisir une endurance compatible avec la plupart des usages des pneumatiques actuels, en choisissant une torsion plus faible.
Ces résultats montrent également que, dans l'intervalle de facteur de torsion K allant de 5,2 à 6,5, la force à rupture initiale est bien supérieure à celle de l'élément de renfort III présentant un facteur de torsion supérieur à l'intervalle.

Comparaison des pneumatiques

On a comparé le pneumatique 10 selon l'invention à un pneumatique PT de l'état de la technique comprenant une nappe de carcasse obtenue à partir du composite NT.

On a tout d'abord comparé les masses des pneumatiques 10 et PT en pesant les pneumatiques testés.

On a également comparé l'endurance des pneumatiques 10 et PT. Pour cela, l'endurance est déterminée en faisant rouler chaque pneumatique testé sur une distance déterminée à une pression inférieure à la pression nominale du pneumatique, par exemple à 1 bar, afin de simuler des conditions sévères de roulage. Lorsque l'on constate une déchéance pertinente du pneumatique, on arrête le test et on détermine le kilométrage parcouru. Le pneumatique est ensuite décortiqué de manière à analyser les dommages et à déterminer si la déchéance constatée était réellement pertinente à l'égard de l'évaluation de l'endurance, ici si la déchéance était causée par la nappe de carcasse. Si c'est le cas, la valeur du kilométrage parcouru est retenue.

On a enfin comparé la robustesse des pneumatiques 10 et PT à l'encontre des aléas routiers, notamment à l'encontre du choc trottoir. Pour cela, on a simulé plusieurs chocs trottoir en faisant percuter le pneumatique par un pendule. En faisant varier l'angle de départ du pendule, on a fait varier l'énergie du choc jusqu'à obtenir une destruction du pneumatique (correspondant à une perte totale de pression). Pour chaque angle, on a alors constaté soit un dommage visible (par exemple une hernie) ne conduisant pas à la destruction du pneumatique soit une destruction du pneumatique. On a ainsi pu calculer deux indicateurs correspondant à la capacité du pneumatique à surmonter un choc trottoir. L'indicateur Facteur F « SVD » (pour Start of Visible Damage) indique l'énergie nécessaire pour obtenir un dommage visible sur le pneumatique. L'indicateur Facteur F « airloss » indique l'énergie nécessaire pour obtenir une la destruction du pneumatique (correspondant à une perte totale de pression). De tels facteurs F sont notamment connus de l'homme du métier, par exemple comme présentés le 13 novembre 2012 à Berlin à la réunion de la VDA (Verband der Automobilindustrie).

Les résultats de ces différents tests sont rassemblés dans le tableau 6 ci-dessous. Chaque facteur F est donné en base 100 par rapport au facteur F du pneumatique PT. Plus chaque facteur F est élevé, plus le pneumatique est robuste. Ainsi, un facteur F supérieur à 100 (100 correspondant au facteur F du pneumatique PT) indique que le pneumatique testé est plus robuste.

**Tableau 6**

| Pneumatique | PT | 10 |
|---|---|---|
| Masse | 10,27 kg | 10,03 kg |
| Endurance | 14100 km | 14541 km |
| Facteur F « SVD » | 100 | 118 |
| Facteur F « Air loss » | 100 | 113 |

Ainsi, on note qu'en plus de présenter une masse réduite, le pneumatique 10 selon l'invention présente des performances de masse et de robustesse supérieures à celles du pneumatique de l'état de la technique PT et une performance d'endurance en condition sévères de roulage équivalente à celles du pneumatique de l'état de la technique PT.

L'invention ne se limite pas aux modes de réalisation précédemment décrits.

Dans des modes de réalisation non décrits ci-dessus, le pneumatique peut présenter un rapport d'aspect allant de 60 à 70.

On pourra également combiner les caractéristiques des différents modes de réalisation et variantes décrits ou envisagés ci-dessus sous réserve que celles-ci soient compatibles entre elles.

**Revendications**

1. Composite d'élastomère (35 ; 36), **caractérisé en ce qu'il** comprend au moins un élément de renfort (44 ; 45) noyé dans une composition d'élastomère, l'élément de renfort (44 ; 45) comprenant un assemblage (47 ; 49) constitué :

   • d'un brin multifilamentaire de polyamide aromatique ou copolyamide aromatique (46), et
   • d'un brin multifilamentaire de polyester (48),

   les deux brins (46, 48) étant enroulés en hélice l'un autour de l'autre et l'élément de renfort (44 ; 45) étant équilibré en torsions, avec les monofilaments des deux brins présentant, dans l'élément de renfort final, la même torsion résiduelle et le facteur de torsion K de l'élément de renfort (44 ; 45) allant de 5,2 à 6,5 avec K défini par la formule $K = (R \times Ti^{1/2}) / 957$

dans laquelle R est la torsion de l'élément de renfort (44 ; 45) exprimée en tours par mètre et Ti est la somme des titres des brins multifilamentaires de l'élément de renfort (44 ; 45) en tex,
et la densité d'éléments de renfort (44 ; 45) dans le composite (35 ; 36) allant de 80 à 145 éléments de renfort par décimètre de composite; avec la torsion résiduelle étant strictement inférieure à 2,5% de R.

2. Composite d'élastomère (35 ; 36) selon la revendication précédente, dans lequel le facteur de torsion K de l'élément de renfort (44 ; 45) va de 5,2 à 6,3 et de préférence de 5,2 à 6,1.

3. Composite d'élastomère (35 ; 36) selon l'une quelconque des revendications précédentes, dans lequel la densité d'éléments de renfort (44 ; 45) dans le composite (35 ; 36) va de 90 à 130 éléments de renfort par décimètre de composite, de préférence de 100 à 125 éléments de renfort par décimètre de composite, plus préférentiellement de 105 à 120 éléments de renfort par décimètre de composite.

4. Composite d'élastomère (35 ; 36) selon l'une quelconque des revendications précédentes, dans lequel la torsion de l'élément de renfort (44 ; 45) va de 250 à 405 tours par mètre, de préférence de 250 à 390 tours par mètre, plus préférentiellement de 250 à 380 tours par mètre.

5. Composite d'élastomère (35 ; 36) selon l'une quelconque des revendications précédentes, dans lequel le module initial en extension de l'élément de renfort (44 ; 45) va de 5,0 à 10,5 cN/tex, de préférence de 7,3 à 9,9 cN/tex, plus préférentiellement de 7,3 à 9,0 cN/tex.

6. Composite d'élastomère (35 ; 36) selon l'une quelconque des revendications précédentes, dans lequel le module final en extension de l'élément de renfort (44 ; 45) va de 14,0 à 21,5 cN/tex, de préférence de 14,8 à 20,9 cN/tex, plus préférentiellement de 16,6 à 20,0 cN/tex.

7. Composite d'élastomère (35 ; 36) selon l'une quelconque des revendications précédentes, dans lequel le rapport du module final sur le module initial va de 2,10 à 2,75, de préférence de 2,15 à 2,65, plus préférentiellement de 2,20 à 2,45.

8. Composite d'élastomère (35) selon l'une quelconque des revendications précédentes, dans lequel le facteur de torsion K de l'élément de renfort (44) va de 5,2 à 5,5, de préférence de 5,3 à 5,5 et encore plus préférentiellement de 5,3 à 5,4.

9. Composite d'élastomère (35 ; 36) selon l'une quelconque des revendications précédentes, dans lequel le rapport du diamètre de l'élément de renfort (44 ; 45) sur l'épaisseur du composite est strictement inférieur à 0,65, de préférence inférieur ou égal à 0,62.

10. Composite d'élastomère (35 ; 36) selon la revendication 15, dans lequel le diamètre de l'élément de renfort (44 ; 45) est inférieur ou égal à 0,95 mm, de préférence inférieur ou égal à 0,80 mm, plus préférentiellement inférieur ou égal à 0,70 mm.

11. Composite d'élastomère (35 ; 36) selon la revendication 15 ou 16, dans lequel l'épaisseur du composite (35 ; 36) est inférieure ou égale à 1,45 mm, de préférence, inférieure ou égale à 1,30 mm, plus préférentiellement inférieure ou égale à 1,20 mm.

12. Pneumatique (10) comprenant une armature de carcasse (32) comprenant au moins une nappe de carcasse (34) **caractérisé en ce que** la nappe de carcasse (34) est obtenue à partir d'un composite d'élastomère (35 ; 36) selon l'une quelconque des revendications précédentes.

13. Pneumatique (10) selon la revendication précédente, dans lequel l'armature de carcasse (32) comprend une seule nappe de carcasse (34).

14. Pneumatique (10) selon la revendication précédente, comprenant deux flancs (22), chaque flanc (22) présente une épaisseur moyenne F mesurée dans un plan tangentiel médian (T) du pneumatique (10), inférieure à 10 mm.

15. Pneumatique (10) selon la revendication 13 ou 14, adapté pour un roulage à plat.

**Patentansprüche**

1.  Elastomerkomposit (35; 36), **dadurch gekennzeichnet, dass** es wenigstens ein Verstärkungselement (44; 45) umfasst, das in eine Elastomerzusammensetzung eingebettet ist, wobei das Verstärkungselement (44; 45) einen Verbund (47; 49) umfasst, welcher besteht:

    • aus einer Multifilamentfaser aus aromatischem Polyamid oder aromatischem Copolyamid (46), und
    • aus einer Multifilamentfaser aus Polyester (48),

    wobei die zwei Fasern (46, 48) spiralförmig umeinander gewickelt sind und das Verstärkungselement (44; 45) sich in Bezug auf Torsionen im Gleichgewicht befindet, wobei die Monofilamente der zwei Fasern in dem endgültigen Verstärkungselement dieselbe Resttorsion aufweisen und der Torsionsfaktor K des Verstärkungselements (44; 45) 5,2 bis 6,5 beträgt, wobei K durch die Formel $K = (R \times Ti^{1/2}) / 957$ definiert ist,
    wobei R die Torsion des Verstärkungselements (44; 45) ist, ausgedrückt in Umdrehungen pro Meter, und Ti die Summe der Titer der Multifilamentfasern des Verstärkungselements (44; 45) in tex ist,
    und wobei die Dichte von Verstärkungselementen (44; 45) in dem Komposit (35; 36) 80 bis 145 Verstärkungselemente pro Dezimeter Komposit beträgt; wobei die Resttorsion streng kleiner als 2,5 % von R ist.

2.  Elastomerkomposit (35; 36) nach dem vorhergehenden Anspruch, wobei der Torsionsfaktor K des Verstärkungselements (44; 45) 5,2 bis 6,3 und vorzugsweise 5,2 bis 6,1 beträgt.

3.  Elastomerkomposit (35; 36) nach einem der vorhergehenden Ansprüche, wobei die Dichte von Verstärkungselementen (44; 45) in dem Komposit (35; 36) 90 bis 130 Verstärkungselemente pro Dezimeter Komposit, vorzugsweise 100 bis 125 Verstärkungselemente pro Dezimeter Komposit, stärker bevorzugt 105 bis 120 Verstärkungselemente pro Dezimeter Komposit beträgt.

4.  Elastomerkomposit (35; 36) nach einem der vorhergehenden Ansprüche, wobei die Torsion des Verstärkungselements (44; 45) 250 bis 405 Umdrehungen pro Meter, vorzugsweise 250 bis 390 Umdrehungen pro Meter, stärker bevorzugt 250 bis 380 Umdrehungen pro Meter beträgt.

5.  Elastomerkomposit (35; 36) nach einem der vorhergehenden Ansprüche, wobei der Anfangsmodul bei Dehnung des Verstärkungselements (44; 45) 5,0 bis 10,5 cN/tex, vorzugsweise 7,3 bis 9,9 cN/tex, stärker bevorzugt 7,3 bis 9,0 cN/tex beträgt.

6.  Elastomerkomposit (35; 36) nach einem der vorhergehenden Ansprüche, wobei der Endmodul bei Dehnung des Verstärkungselements (44; 45) 14,0 bis 21,5 cN/tex, vorzugsweise 14,8 bis 20,9 cN/tex, stärker bevorzugt 16,6 bis 20,0 cN/tex beträgt.

7.  Elastomerkomposit (35; 36) nach einem der vorhergehenden Ansprüche, wobei das Verhältnis des Endmoduls zum Anfangsmodul 2,10 bis 2,75, vorzugsweise 2,15 bis 2,65, stärker bevorzugt 2,20 bis 2,45 beträgt.

8.  Elastomerkomposit (35) nach einem der vorhergehenden Ansprüche, wobei der Torsionsfaktor K des Verstärkungselements (44) 5,2 bis 5,5, vorzugsweise 5,3 bis 5 und noch stärker bevorzugt 5,3 bis 5,4 beträgt.

9.  Elastomerkomposit (35; 36) nach einem der vorhergehenden Ansprüche, wobei das Verhältnis des Durchmessers des Verstärkungselements (44; 45) zur Dicke des Komposits streng kleiner als 0,65, vorzugsweise kleiner oder gleich 0,62 ist.

10. Elastomerkomposit (35; 36) nach Anspruch 15, wobei der Durchmesser des Verstärkungselements (44; 45) kleiner oder gleich 0,95 mm, vorzugsweise kleiner oder gleich 0,80 mm, stärker bevorzugt kleiner oder gleich 0,70 mm ist.

11. Elastomerkomposit (35; 36) nach Anspruch 15 oder 16, wobei die Dicke des Komposits (35; 36) kleiner oder gleich 1,45 mm, vorzugsweise kleiner oder gleich 1,30 mm, stärker bevorzugt kleiner oder gleich 1,20 mm ist.

12. Reifen (10), welcher eine Karkassenbewehrung (32) umfasst, die wenigstens eine Karkassenlage (34) umfasst, **dadurch gekennzeichnet, dass** die Karkassenlage (34) aus einem Elastomerkomposit (35; 36) nach einem der vorhergehenden Ansprüche erhalten wird.

**13.** Reifen (10) nach dem vorhergehenden Anspruch, wobei die Karkassenbewehrung (32) eine einzige Karkassenlage (34) umfasst.

**14.** Reifen (10) nach dem vorhergehenden Anspruch, welcher zwei Seitenwände (22) umfasst, wobei jede Seitenwand (22) eine in einer tangentialen Mittelebene (T) des Reifens (10) gemessene mittlere Dicke F aufweist, die kleiner als 10 mm ist.

**15.** Reifen (10) nach Anspruch 13 oder 14, welcher für einen Notlauf ausgelegt ist.

**Claims**

**1.** Elastomer composite (35; 36), **characterized in that** it comprises at least one reinforcing element (44; 45) embedded in an elastomer composition, the reinforcing element (44; 45) comprising an assembly (47; 49) made up:

- of a multifilament strand made of aromatic polyamide or aromatic copolyamide (46), and
- of a multifilament strand made of polyester (48),

the two strands (46, 48) being wound in a helix around one another and the reinforcing element (44; 45) being twist-balanced, the twist factor K of the reinforcing element (44; 45) ranging from 5.2 to 6.5 with K being defined by the formula $K = (R \times Ti^{1/2}) / 957$
in which R is the twist of the reinforcing element (44; 45) expressed in twists per metre and Ti is the sum of the counts of the multifilament strands of the reinforcing element (44; 45) in tex,
and the density of reinforcing elements (44; 45) in the composite (35; 36) ranging from 80 to 145 reinforcing elements per decimetre of composite; with the residual twist is strictly below 2.5% of the twist R.

**2.** Elastomer composite (35; 36) according to the preceding claim, in which the twist factor K of the reinforcing element (44; 45) ranges from 5.2 to 6.3, and preferably from 5.2 to 6.1.

**3.** Elastomer composite (35; 36) according to either one of the preceding claims, in which the density of reinforcing elements (44; 45) in the composite (35; 36) ranges from 90 to 130 reinforcing elements per decimetre of composite, preferably from 100 to 125 reinforcing elements per decimetre of composite, and more preferably from 105 to 120 reinforcing elements per decimetre of composite.

**4.** Elastomer composite (35; 36) according to any one of the preceding claims, in which the twist of the reinforcing element (44; 45) ranges from 250 to 405 twists per metre, preferably from 250 to 390 twists per metre, and more preferably from 250 to 380 twists per metre.

**5.** Elastomer composite (35; 36) according to any one of the preceding claims, in which the initial tensile modulus of the reinforcing element (44; 45) ranges from 5.0 to 10.5 cN/tex, preferably from 7.3 to 9.9 cN/tex, and more preferably from 7.3 to 9.0 cN/tex.

**6.** Elastomer composite (35; 36) according to any one of the preceding claims, in which the final tensile modulus of the reinforcing element (44; 45) ranges from 14.0 to 21.5 cN/tex, preferably from 14.8 to 20.9 cN/tex, and more preferably from 16.6 to 20.0 cN/tex.

**7.** Elastomer composite (35; 36) according to any one of the preceding claims, in which the ratio of the final modulus to the initial modulus ranges from 2.10 to 2.75, preferably from 2.15 to 2.65, and more preferably from 2.20 to 2.45.

**8.** Elastomer composite (35) according to any one of the preceding claims, in which the twist factor K of the reinforcing element (44) ranges from 5.2 to 5.5, preferably from 5.3 to 5.5, and more preferably still from 5.3 to 5.4.

**9.** Elastomer composite (35; 36) according to any one of the preceding claims, in which the ratio of the diameter of the reinforcing element (44; 45) to the thickness of the composite is strictly less than 0.65, preferably less than or equal to 0.62.

**10.** Elastomer composite (35; 36) according to Claim 15, in which the diameter of the reinforcing element (44; 45) is less than or equal to 0.95 mm, preferably less than or equal to 0.80 mm, more preferably less than or equal to 0.70 mm.

**11.** Elastomer composite (35; 36) according to Claim 15 or 16, in which the thickness of the composite (35; 36) is less than or equal to 1.45 mm, preferably less than or equal to 1.30 mm, more preferably less than or equal to 1.20 mm.

**12.** Tyre (10) comprising a carcass reinforcement (32) comprising at least one carcass ply (34), **characterized in that** the carcass ply (34) is obtained from an elastomer composite (35; 36) according to any one of the preceding claims.

**13.** Tyre (10) according to the preceding claim, in which the carcass reinforcement (32) comprises a single carcass ply (34).

**14.** Tyre (10) according to the preceding claim, comprising two sidewalls (22), each sidewall (22) has a mean thickness F, measured in a median tangential plane (T) of the tyre (10), of less than 10 mm.

**15.** Tyre (10) according to any one of Claims 13 or 14, designed to run flat.

Fig. 1

Fig. 2

35, 36     47, 49     44, 45

P

D

# Fig. 3a

NT          ET

P

D

# Fig. 3b

46

47, 49

44, 45

48

# Fig. 4

45

48

46

d

# Fig. 5

Fig. 6

Fig. 7

## RÉFÉRENCES CITÉES DANS LA DESCRIPTION

**Documents brevets cités dans la description**

- EP 2233318 A
- FR 3005471
- FR 2996807
- DE 10201322573
- FR 2402020
- WO 02096677 A